# EUROPEAN PATENT APPLICATION

(11) **EP 4 407 767 A1**
(43) Date of publication of application: **31.07.2024**
(21) Application number: 22871730.2
(22) Date of filing: 23.08.2022
(51) Int. Cl.: H01M 50/209, H01M 50/258, H01M 50/289

(54) **BATTERY PACK, MANUFACTURING METHOD THEREFOR, AND ELECTRIC DEVICE**

(30) Priority: 24.09.2021 CN 202111123727
(71) Applicant: DONGGUAN POWERAMP TECHNOLOGY LIMITED, Dongguan, Guangdong 523000 (CN)
(72) Inventor: SHENG, Junhua, Dongguan, Guangdong 523000 (CN); WANG, Shenbo, Dongguan, Guangdong 523000 (CN); YANG, Dian, Dongguan, Guangdong 523000 (CN)
(74) Representative: Icosa
(86) International application number: PCT/CN2022/114313
(87) International publication number: WO 2023/045677

(57) **Abstract**

A battery pack is provided. The battery pack includes a housing assembly, and a cell module and a first electrical connection portion accommodated in the housing assembly. The cell module includes a plurality of battery cells stacked in a first direction. The housing assembly includes a first wall and a second wall disposed opposite to each other in the first direction, the housing assembly is provided with an opening. The first electrical connection portion includes a first part and a second part, where the first part is electrically connected to the plurality of battery cells. The first part has a first edge, and the second part is connected to the first edge and disposed within the housing assembly. The second part is configured to connect to an external testing apparatus. The second part has a length greater than a distance between the first edge and the first wall in the first direction. The battery pack and the electric device in this application can be tested using the external testing apparatus connected to the first electrical connection portion after the battery pack is assembled. This testing method enables the testing of the battery pack, including detecting minor damages to the battery pack during the assembly. This application further provides a method for manufacturing a battery pack.

## Description

### TECHNICAL FIELD

This application relates to the field of energy storage technologies, and in particular, to a battery pack, a manufacturing method, and an electric device.

### BACKGROUND

Before leaving the factory, batteries need to undergo testing, typically using test ports left on the circuit board. Some battery tests are usually completed before assembly into the final product. Assembling after testing may result in process-induced damage to the battery during the final product assembly that cannot be identified.

### SUMMARY

In view of this, there is a need to provide a battery pack, a manufacturing method, and an electric device, so that testing can be performed after assembly and minor damages to the battery pack caused by the assembly process during the assembly can be detected.

An embodiment of this application provides a battery pack. The battery pack includes a housing assembly, and a cell module and a first electrical connection portion accommodated in the housing assembly. The cell module includes a plurality of battery cells stacked in a first direction. The housing assembly includes a first wall and a second wall disposed opposite to each other in the first direction, the housing assembly is provided with an opening. The first electrical connection portion includes a first part and a second part, where the first part is electrically connected to the plurality of battery cells. The first part has a first edge, and the second part is connected to the first edge and disposed within the housing assembly. The second part is configured to be connect to an external testing apparatus. The second part has a length greater than a distance between the first edge and the first wall in the first direction.

In the battery pack in this application, the first electrical connection portion is connected to the external testing apparatus. This enables the testing of the battery pack. In addition, the battery pack assembled is connected to the external testing apparatus for testing through the first electrical connection portion, thereby detecting minor damages to the battery pack caused by the assembly process during the assembly. This facilitates prompt repairs, thereby enhancing the assembly yield and quality of the battery pack.

Further, in some embodiments of this application, the battery cell includes a cell housing, an electrode assembly disposed in the cell housing, and an electrode terminal connected to the electrode assembly and led out of the cell housing. The second part includes a first section and a second section. The first section is bent relative to the first direction. The second section is disposed between the first wall and the cell housing.

Further, in some embodiments of this application, the cell housing includes an accommodating portion for accommodating the electrode assembly. In the first direction, a projection of the second section is spaced apart from a projection of the accommodating portion. This reduces the possibility of the second section coming into contact with the electrode terminal and the accommodating portion and limits squeeze applied to the second section by the accommodating portion when the accommodating portion swells.

Further, in some embodiments of this application, the battery pack further includes a circuit board. The first part includes a first portion and a second portion. The first portion includes a conductive sheet, where the conductive sheet is connected to the electrode terminal. The second portion is connected to the circuit board and the first portion.

Further, in some embodiments of this application, the second portion includes a first connecting portion and a second connecting portion. The first connecting portion connects the circuit board and the first portion and is configured to transmit a current signal of the battery pack. The second connecting portion connects the circuit board and the first portion and is configured to transmit a current. The second connecting portion has a thickness greater than a thickness of the first connecting portion. This increases the transmission of the total positive current and the total negative current, and implements integrated transmission of the current and the current signal, simplifying the production steps and reducing the need for the welding of additional components.

Further, in some embodiments of this application, the first wall is provided with a first convex portion. In the second direction, a projection of the first convex portion overlaps with a projection of the second part. In the second direction Y and a third direction Z, the convex portion restricts a position of the second part and reduces movement of the second part within the housing.

Further, in some embodiments of this application, the battery pack further includes a second insulating member connected to the second section. The second insulating member is disposed between the first wall and the second section. The first wall is provided with a first convex portion. In the second direction, a projection of the first convex portion overlaps with a projection of the second insulating member. The second part is restricted between the first wall and the second insulating member through the second insulating member, so that the risk of short circuit between the second part and the battery cell is reduced.

Further, in some embodiments of this application, the first wall is provided with a second convex portion. In a third direction, a projection of the second convex portion overlaps with a projection of the second part, the third direction is perpendicular to both the first direction and the second direction.

Further, in some embodiments of this application, when viewed along a direction opposite the first direction, the first section is at least partially located within the opening.

Further, in some embodiments of this application, the housing assembly includes a first housing and a second housing. The first housing accommodates the battery cell. The first housing has a first opening. The second housing has a second opening. The second housing is connected to the first housing. The first opening and the second opening form the opening.

Further, in some embodiments of this application, the housing assembly includes a third insulating member. The third insulating member is disposed within the opening.

Further, in some embodiments of this application, the convex portion further includes a second convex portion, where the second convex portion is connected to the first convex portion at one end and extends along a direction opposite the second direction. In the third direction, the projection of the second convex portion overlaps with a projection of the second insulating member.

Further, in some embodiments of this application, the convex portion further includes a third convex portion, where the third convex portion extends along the third direction, and two ends of the third convex portion in the third direction are connected to an end of the two second convex portions away from the first convex portion, respectively. A portion of the structure of the first wall, the first convex portion, the two second convex portions, and the third convex portion fit to form a first concave portion.

Further, in some embodiments of this application, the second part is partially disposed within the first concave portion. The second insulating member is at least partially disposed within the first concave portion.

Further, in some embodiments of this application, the second insulating member is connected to the second part. In the second direction, the projection of the first convex portion and the projection of the second part are spaced apart.

Further, in some embodiments of this application, the battery pack includes two second insulating members, and in the first direction, the second part is partially disposed between the two second insulating members.

Further, in some embodiments of this application, the cell housing further includes a sealing portion. The accommodating portion and the sealing portion form a first space. The battery pack further includes a first insulating member, where the first insulating member is disposed within the first space, and the first portion is connected to the first insulating member.

The provision of the first insulating member in the first space facilitates the mounting of the first electrical connection portion, reducing the risk of short circuit between the first electrical connection portion and the battery cell.

An embodiment of this application further provides a method for manufacturing the battery pack according to any one of the foregoing embodiments, including the following steps: connecting the first electrical connection portion and the cell module and placing the first electrical connection portion and the cell module in the housing assembly; extending the second part out of the opening of the housing assembly, connecting the second part and the external testing apparatus, and testing the battery pack; and after the testing is completed, bending the second part back into the housing assembly.

An embodiment of this application further provides an electric device, including the battery pack according to any of the foregoing embodiments or a battery pack manufactured by using the manufacturing method described above.

The battery pack according to some embodiments of this application after assembled is connected to an external testing apparatus for testing. This testing method enables the testing of the battery pack, including detecting minor damages to the battery pack caused by the assembly process during the assembly. This facilitates prompt repairs, thereby enhancing the assembly yield and quality of the battery pack.

### BRIEF DESCRIPTION OF DRAWINGS

FIG. 1 is a schematic structural diagram of a battery pack in some embodiments.
FIG. 2 is a schematic structural exploded view of a battery pack in some embodiments.
FIG. 3 is a schematic structural diagram of a battery cell in some embodiments.
FIG. 4 is a schematic structural diagram of a first housing in some embodiments.
FIG. 5 is a schematic structural diagram of a housing assembly in some embodiments.
FIG. 6 is a schematic structural diagram of a cross section of a battery pack in a II-II direction in some embodiments.
FIG. 7 is a schematic structural diagram of a cross section of a battery pack in a III-III direction in some embodiments.
FIG. 8 is a schematic structural diagram of a cross section of a battery pack in a II-II direction in some other embodiments.
FIG. 9 is a schematic structural diagram of a cross section of a battery pack in a III-III direction in some other embodiments.
FIG. 10 is a schematic structural diagram of a first electrical connection portion in some embodiments.
FIG. 11 is a schematic structural diagram of a battery pack from another perspective in some embodiments.
FIG. 12 is a schematic structural diagram of a cross section of a battery pack in a II-II direction in still some other embodiments.
FIG. 13 is a schematic diagram of a state of a second part in some embodiments.
FIG. 14 is a schematic structural diagram of an electric device in an embodiment.

Reference signs of main components:

| | |
|---|---|
| Battery pack | 100 |
| Housing assembly | 10 |
| Opening | 10a |
| First wall | 10b |
| Second wall | 10c |
| First housing | 11 |
| First opening | 111 |
| Second housing | 12 |
| Second opening | 121 |

| | |
|---|---|
| Convex portion | 13 |
| Second insulating member | 13a |
| First concave portion | 13b |
| First convex portion | 131 |
| Second convex portion | 132 |
| Third convex portion | 133 |
| Third insulating member | 14 |
| Cell module | 20 |
| Battery cell | 21 |
| First space | 21a |
| First insulating member | 21b |
| Cell housing | 211 |
| Sealing portion | 211a |
| Accommodating portion | 211b |
| Electrode terminal | 213 |
| Circuit board | 30 |
| Connector | 31 |
| First electrical connection portion | 40 |
| First part | 41 |
| First edge | 41a |
| First portion | 411 |
| Conductive sheet | 411a |
| Through hole | 411b |
| Second portion | 412 |
| First connecting portion | 412a |
| Second connecting portion | 412b |
| Second part | 42 |
| First section | 421 |
| Second section | 422 |
| Electric device | 200 |
| First direction | X |
| Second direction | Y |
| Third direction | Z |

This application will be further described with reference to the accompanying drawings in the following specific some embodiments.

### DETAILED DESCRIPTION OF EMBODIMENTS

The following describes the technical solutions in some embodiments of this application with reference to the accompanying drawings in some embodiments of this application. Apparently, the described some embodiments are only some rather than all of some embodiments of this application.

It should be noted that when a component is referred to as being "installed to" another component, it may be directly installed to the another component, or there may be a component in between. When one component is deemed as being "disposed on" another component, it can be directly disposed on the another component, or there can be a component in between.

Unless otherwise defined, all technical and scientific terms used herein shall have the same meanings as commonly understood by those skilled in the art to which this application pertains. The terms used herein in the specification of this application are for description of specific some embodiments only without any intention to limit this application. The term "or/and" used herein includes any and all combinations of one or more associated items listed.

It can be understood that when two components are disposed parallel/perpendicular in a same direction, there may be an angle between the two components, a tolerance of 0-±5% is allowed between the two components. When two components is greater than, equal to, or less than , a tolerance of 0-±10% is allowed between the two components. When the projections of the two components are the same or overlap, a tolerance of 0-±10% is allowed between the two components.

The following describes in detail some embodiments of this application with reference to the accompanying drawings. In absence of conflicts, the following some embodiments and features in some embodiments may be combined.

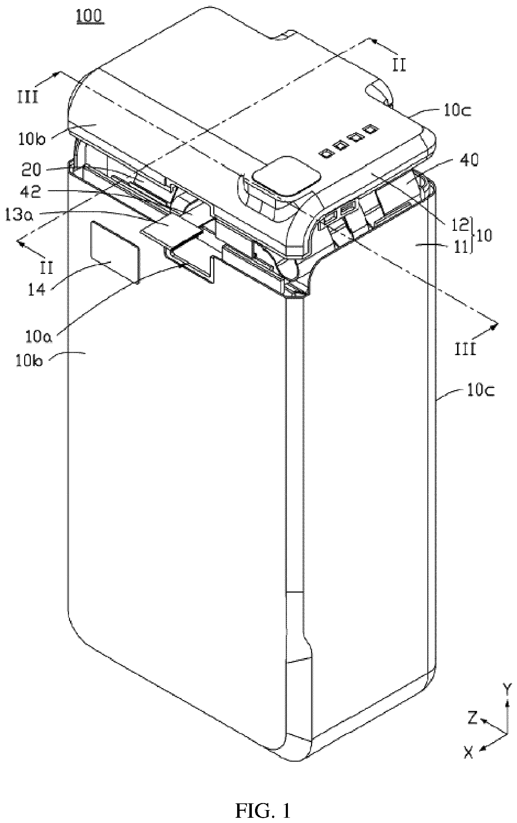

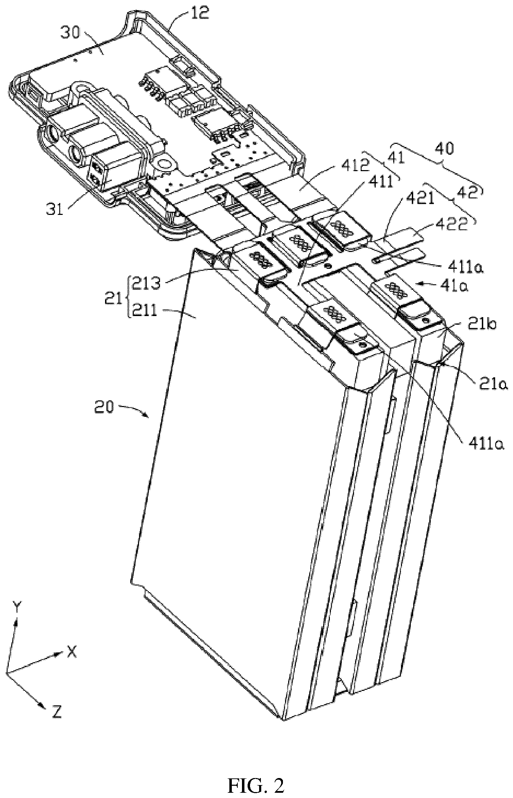

Referring to FIGs. 1 and 2, an embodiment of this application provides a battery pack 100, where the battery pack 100 includes a housing assembly 10, a cell module 20, and a first electrical connection portion 40. The cell module 20 includes a plurality of battery cells 21 stacked in a first direction X. In an embodiment, the battery pack 100 further includes a circuit board 30, where the plurality of battery cells 21, the circuit board 30, and the first electrical connection portion 40 are accommodated within the housing assembly 10. The housing assembly 10 has an opening 10a. The first electrical connection portion 40 includes a first part 41 and a second part 42. The first part 41 is electrically connected to the circuit board 30 and the plurality of battery cells 21, such that the circuit board 30 is electrically connected to the plurality of battery cells 21. The second part 42 can be configured to be connected to an external testing apparatus. The first part 41 has a first edge 41a, and the second part 42 is connected to the first edge 41a and bent within the housing assembly 10. When an assembled battery pack 100 is being tested, the second part 42 extends out from the opening 10a to connect to an external testing apparatus. After the testing is completed, the second part 42 is bent back into the housing assembly 10 through the opening 10a. The battery pack assembled is connected to an external testing apparatus for testing through the second part 42. This testing method enables the testing of the battery pack 100, including detecting damages to the battery pack 100 caused by the assembly process during the assembly. This facilitates prompt repairs, thereby enhancing the assembly yield and quality of the battery pack 100. In an embodiment, the circuit board 30 includes a circuit board having a battery management system for intelligently managing and maintaining the battery pack 100, which can reduce overcharge and over discharge of the battery pack 100, monitor the state of the battery pack 100, and extend the service life of the battery pack 100. The circuit board 30 is provided with a connector 31, where the connector 31 is connected to an external device. It can be understood that the cell module 20 may alternatively include a single battery cell 21.

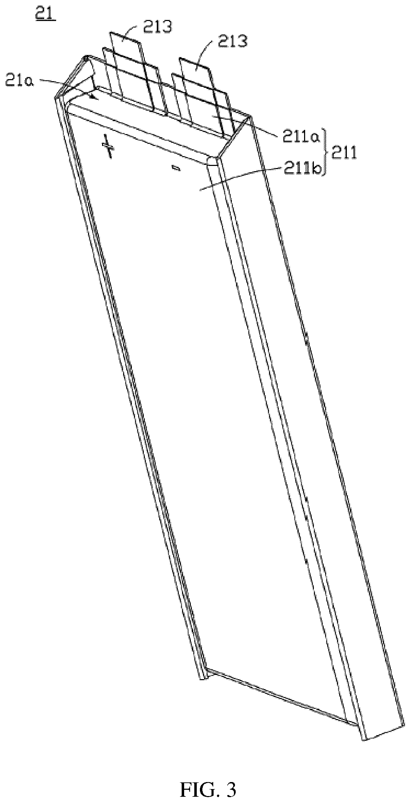

Referring to FIGs. 2 and 3, in an embodiment, the battery cell 21 includes a cell housing 211, an electrode assembly (not shown in the figures), and an electrode terminal 213, where the electrode assembly is accommodated within the cell housing 211, and the electrode terminal 213 is connected to the electrode assembly and extends outward from the cell housing 211. The electrode assembly includes a structure formed by a positive electrode plate, a negative electrode plate, and a separator. Further, the cell housing 211 includes interconnected sealing portion 211a and accommodating portion 211b, where the sealing portion 211a is located at an edge of the accommodating portion 211b and extends outward from the accommodating portion 211b, the electrode assembly is accommodated within the accommodating portion 211b, and the electrode terminal 213 extends out from the sealing portion 211a. Optionally, the cell housing 211 includes an aluminum-plastic film. Optionally, the battery cell 21 includes a pouch cell.

In an embodiment, the accommodating portion 211b and the sealing portion 211a fit to form a first space 21a, where the first space 21a is provided with a first insulating member 21b inside. The first part 41 may be disposed on the first insulating member 21b to facilitate mounting of the first electrical connection portion 40 and reduce the risk of short circuit between the first electrical connection portion 40 and the battery cell 21. Optionally, the first insulating member 21b includes foam.

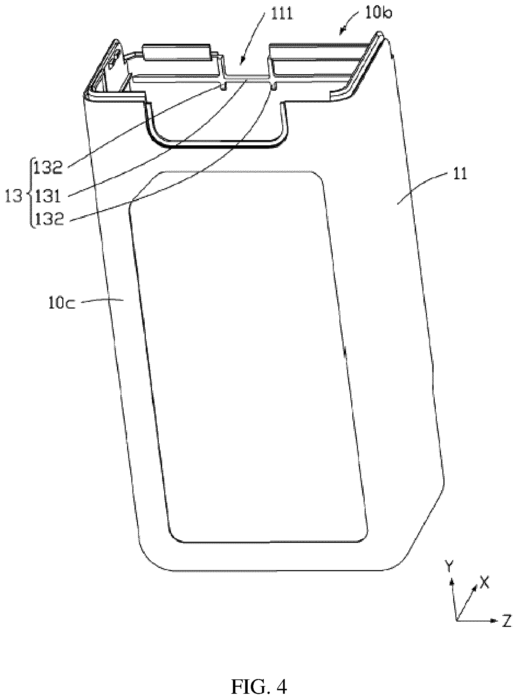

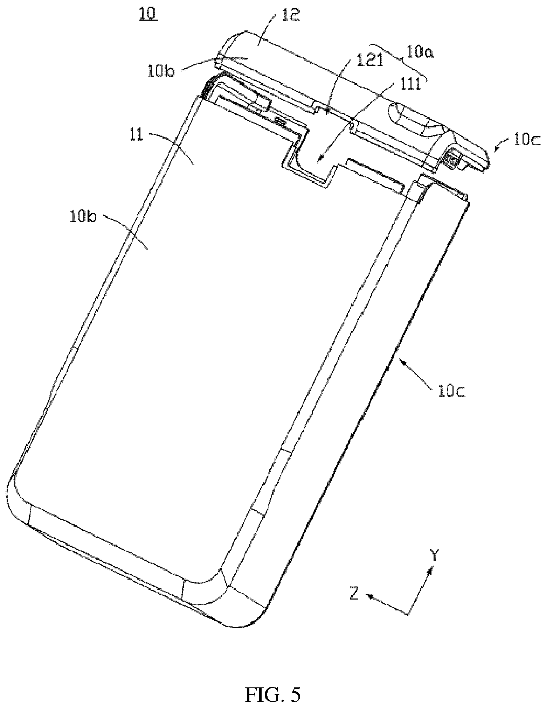

Referring to FIGs. 4 and 5, in an embodiment, the housing assembly 10 includes a first housing 11 and a second housing 12, where the first housing 11 accommodates the plurality of battery cells 21, and the second housing 12 is connected to the first housing 11 to form an accommodating space for accommodating the plurality of battery cells 21, the circuit board 30, and the first electrical connection portion 40 in the accommodating space. The first housing 11 has a first opening 111 and the second housing 12 has a second opening 121. When the second housing 12 is connected to the first housing 11, the first opening 111 and the second opening 121 fit to form the opening 10a. In an embodiment, the housing assembly 10 includes a first wall 10b and a second wall 10c are disposed opposite to each other in a direction opposite the first direction X, where the opening 10a is disposed on the first wall 10b. In another embodiment, the opening 10a may alternatively be disposed on the second wall 10c. In other embodiments, the opening 10a may be disposed on the first housing 11, and the first opening 111 forms the opening 10a.

In an embodiment, the opening 10a may also be configured to observe whether the waterproof label inside the housing assembly 10 has failed.

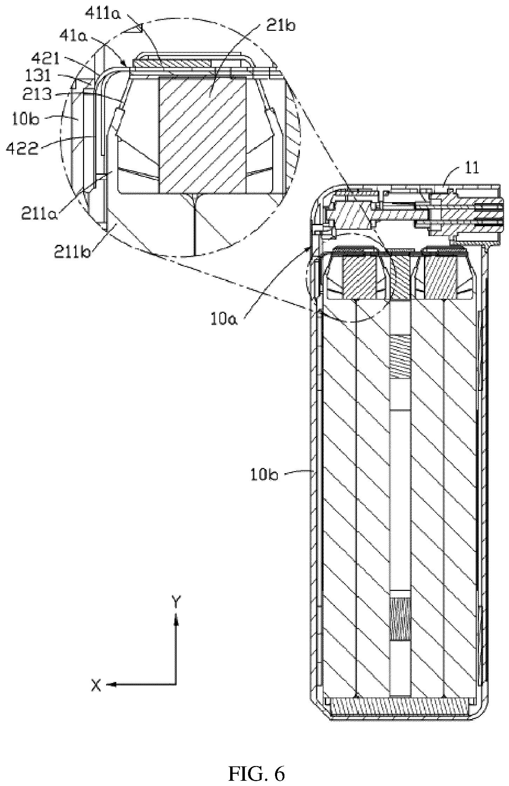

Referring to FIG. 6 together, as an example, the opening 10a is disposed on the first wall 10b. In an embodiment, the first wall 10b is provided with a convex portion 13, where the convex portion 13 is disposed within the accommodating space. The convex portion 13 includes a first convex portion 131, and in the second direction Y, a projection of the first convex portion 131 overlaps with a projection of the second part 42. The second part 42 is partially disposed below the first convex portion 131, restricting a position of the second part 42 in the second direction Y. Optionally, the first convex portion 131 is provided in a third direction Z, where the third direction Z is perpendicular to the first direction X and the second direction Y.

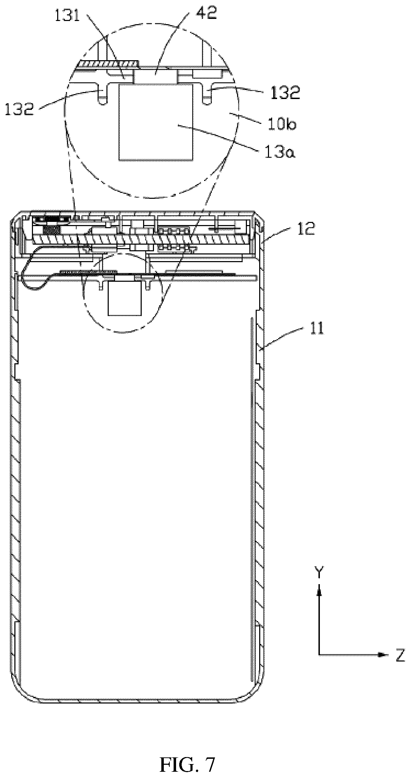

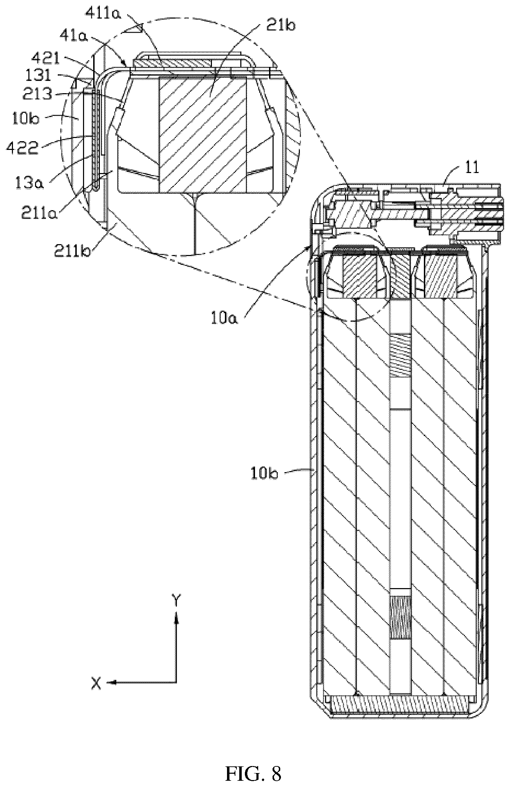

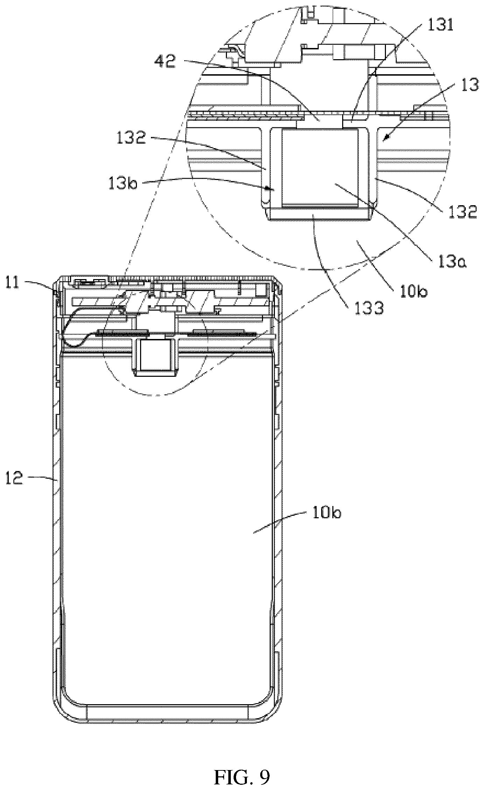

Referring to FIGs. 7, 8, and 9, in an embodiment, the convex portion 13 further includes a second convex portion 132, where the second convex portion 132 is connected to the first convex portion 131 at one end and extends along a direction opposite the second direction Y. In the third direction Z, a projection of the second convex portion 132 overlaps with a projection of the second part 42, and the second convex portion 132 can restrict the position of the second part 42 in the third direction Z. Optionally, the convex portion 13 includes two second convex portions 132. In the third direction Z, the second part 42 is at least partially disposed between the two second convex portions 132, further restricting the position of the second part 42. The first convex portion 131 and the two second convex portions 132 fit to form a U-shaped structure that restricts the position of the second part 42 in the second direction Y and the third direction Z, allowing the second part 42 to be bent within the housing assembly 10, and reducing movement of the second part 42 within the housing.

In an embodiment, the battery pack 100 includes a second insulating member 13a, where the second insulating member 13a is connected to the second part 42, for example, through bonding or the like. In the second direction Y, the projection of the first convex portion 131 overlaps with a projection of the second insulating member 13a. The position of the second insulating member 13a in the second direction Y is restricted by the convex portion 13, thereby further restricting the position of the second part 42. Optionally, in the first direction X, the second insulating member 13a is located between the second part 42 and the first wall 10b, and optionally, in the first direction X, the second part 42 is located between the second insulating member 13a and the first wall 10b. Optionally, the second insulating member 13a includes an elastic substance that enhances the protection for the second part 42, for example, the second insulating member 13a includes foam. In the third direction Z, the second insulating member 13a is disposed between the two second convex portions 132, further restricting the position of the second part 42. The first convex portion 131 and the two second convex portions 132 fit to form a U-shaped structure that restricts the position of the second insulating member 13a in the second direction Y and the third direction Z. Optionally, in the second direction Y, the projection of the first convex portion 131 and the projection of the second part 42 are spaced apart, and the first convex portion 131 is connected to the second insulating member 13a, reducing interference and damage from the first convex portion 131 to the second part 42. Optionally, the second insulating member 13a is adhered to the second part 42. Optionally, the second insulating member 13a is adhered to the first wall 10b.

In an embodiment, the convex portion 13 further includes a second convex portion 132, where the second convex portion 132 is connected to the first convex portion 131 at one end and extends along a direction opposite the second direction Y. In the third direction Z, a projection of the second convex portion 132 overlaps with a projection of the second insulating member 13a, and the second convex portion 132 can restrict the position of the second insulating member 13a in the third direction Z. Optionally, the convex portion 13 includes two second convex portions 132. In the third direction Z, the second insulating member 13a is at least partially disposed between the two second convex portions 132, further restricting the position of the second insulating member 13a. The first convex portion 131 and the two second convex portions 132 fit to form a U-shaped structure that restricts the position of the second insulating member 13a in the second direction Y and the third direction Z, allowing the second part 42 to be bent within the housing assembly 10, and reducing movement of the second part 42 within the housing.

In an embodiment, the convex portion 13 further includes a third convex portion 133, where the third convex portion 133 extends along the third direction Z, and two ends of the third convex portion 133 in the third direction Z are connected to an end of the two second convex portions 132 away from the first convex portion 131, respectively. A portion of the structure of the first wall 10b, the first convex portion 131, the two second convex portions 132, and the third convex portion 133 fit to form a first concave portion 13b. Optionally, the second part 42 is partially disposed within the first concave portion 13b, and optionally, the second insulating member 13a is at least partially disposed within the first concave portion 13b.

In an embodiment, the battery pack 100 includes two second insulating members 13a. In the first direction X, the second part 42 is partially disposed between the two second insulating members 13a, enhancing the protection for the second part 42 and reducing the damage to the second part 42 from the first wall 10b, the first convex portion 131, and the like. Optionally, one of the second insulating members 13a is connected to the first wall 10b, for example, adhered to the first wall 10b; and the other second insulating member 13a is connected to a side of the second part 42 closer to the cell module 20, for example, adhered to the second part 42. Optionally, one of the second insulating members 13a is connected to a side of the second part 42 farther away from the cell module 20; and the other second insulating member 13a is connected to the side of the second part 42 closer to the cell module 20. For example, both second insulating members 13a are adhered to the second part 42, and the two second insulating members 13a are movable together with the second part 42.

In an embodiment, the first insulating member 21b include foam, the second insulating member 13a include foam.

In an embodiment, the housing assembly 10 further includes a third insulating member 14 disposed at the opening 10a for closing the opening 10a.

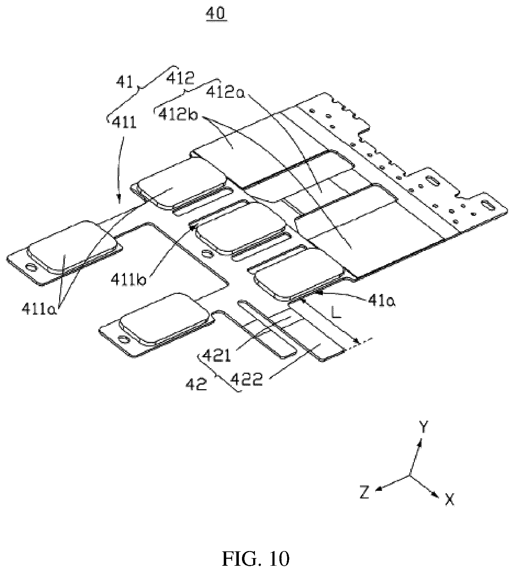

Referring to FIGs. 2 and 10, in an embodiment, the first part 41 includes a first portion 411 and a second portion 412. The first portion 411 is disposed on the first insulating member 21b and the first portion 411 includes a conductive sheet 411a. The conductive sheet 411a is disposed on a side of the first portion 411 facing away from the first insulating member 21b. The first portion 411 is provided with a through holes 411b on two sides of the conductive sheet 411a in the first direction X. The electrode terminal 213 passes through the through hole 411b and is folded, and then stacked and connected to the conductive sheet 411a. The second portion 412 is connected to the first portion 411 and the circuit board 30. In an embodiment, the second portion 412 is flexibly connected to the circuit board 30 to reduce the risk of the battery pack 100 during oscillation and falling processes. The first portion 411 and the cell housing 211 are disposed opposite to each other in the second direction Y.

In an embodiment, the second portion 412 includes a first connecting portion 412a and a second connecting portion 412b, where the first connecting portion 412a connects the circuit board 30 and the first portion 411 and is configured to transmit a signal of the battery pack 100. The second connecting portion 412b connects the circuit board 30 and the first portion 411 and is configured to transmit a current. It can be understood that the second connecting portion 412b is provided in two for transmitting a total positive current and a total negative current, respectively.

Referring to FIG. 10, the first connecting portion 412a and the second connecting portion 412b are in an unbent state. In the second direction Y, the first connecting portion 412a has a first surface and a second surface, and a distance between the first surface and the second surface in the second direction Y is a thickness of the first connecting portion 412a. In an embodiment, the second connecting portion 412b has a thickness greater than a thickness of the first connecting portion 412a. This increases the transmission of the total positive current and the total negative current, and implements integrated transmission of the current and the current signal, simplifying the production steps and reducing the need for the welding of additional components.

In an embodiment, the first connecting portion 412a has a thickness in a range of 0.08 mm-0.12 mm, for example, 0.08 mm, 0.09 mm, 0.10 mm, 0.11 mm, or 0.12 mm; and the second connecting portion 412b has a thickness in a range of 0.15 mm-0.25 mm, for example, 0.15 mm, 0.16 mm, 0.17 mm, 0.18 mm, 0.19 mm, 0.20 mm, 0.21 mm, 0.22 mm, 0.23 mm, 0.24 mm, or 0.25 mm.

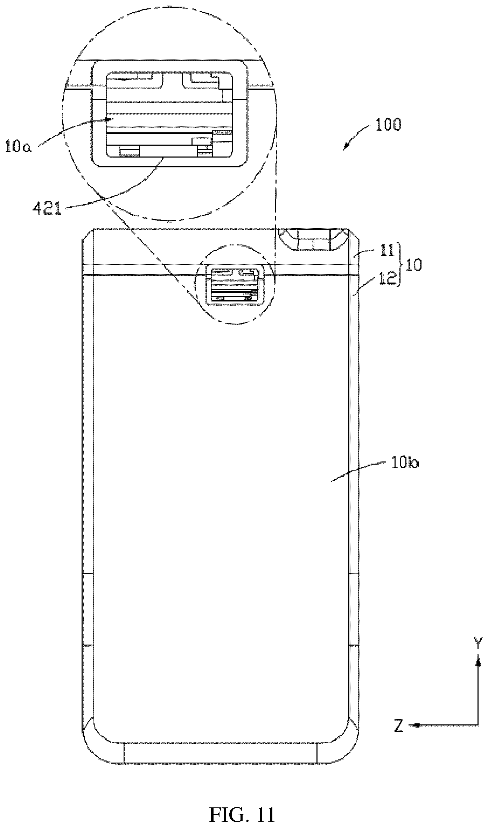

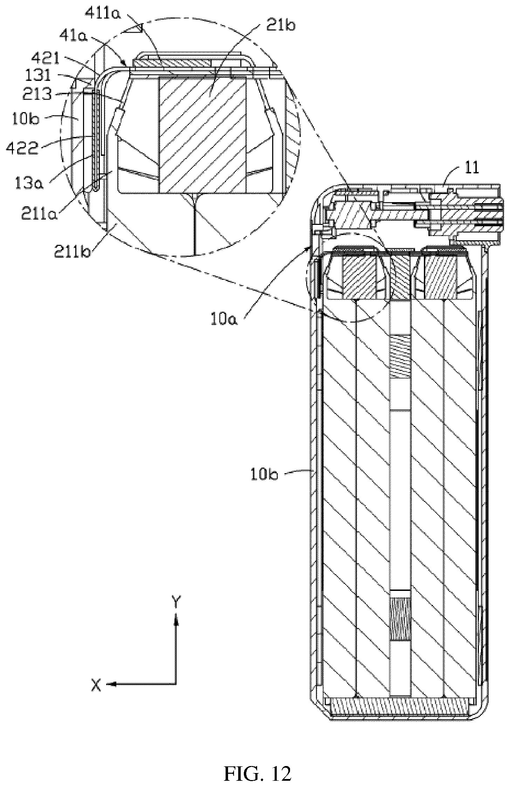

Referring to FIGs. 10, 11, and 12, in an embodiment, the second part 42 has a length L greater than a distance between the first edge 41a and the first wall 10b in the first direction X. This allows the second part 42 to extend out of the first wall 10b through the opening 10a for connecting to an external testing apparatus, facilitating testing of the battery pack 100.

In an embodiment, the second part 42 includes a first section 421 and a second section 422, where the first section 421 is connected to the first edge 41a of the first part 41. When the second part 42 is bent within the housing assembly 10, the first section 421 is bent relative to the first direction X. Optionally, the first section 421 is bent in a direction opposite the second direction Y, and the second section 422 extends along the direction opposite the second direction Y. In the first direction X, the second section 422 is disposed between the first wall 10b and the cell housing 211. When viewed along a direction opposite the first direction X, the first section 421 is at least partially located within the opening 10a, facilitating observation of whether the position of the second part 42 is properly set through the opening 10a.

In the first direction X, the second section 422 is disposed between the sealing portion 211a and the first wall 10b. Further, the second section 422 is connected to the second insulating member 13a. In the first direction X, a projection of the second section 422 is spaced apart from a projection of the accommodating portion 211b, reducing the possibility of contact between the second section 422 and the accommodating portion 211b, and limiting the squeeze applied to the second section 422 by the accommodating portion 211b when the accommodating portion 211b swells.

Referring to FIGs. 6 and 10, in an embodiment, the first electrical connection portion 40 includes a flexible printed circuit board, where the second part 42 is elastic, rebounds under elastic force, and is in contact with the first convex portion 131. Optionally, the flexible printed circuit board includes an insulating film, a conductor, and an adhesive layer. The insulating film has good flexibility and temperature resistance, for example, the insulating film may include polyimide (PI) and polyester (PET) materials, with commonly used thicknesses of 50, 75, 100, 125 micrometers, and the like. Metallic copper is typically used as the conductor, and the adhesive layer is configured to adhere the insulating film to the conductor.

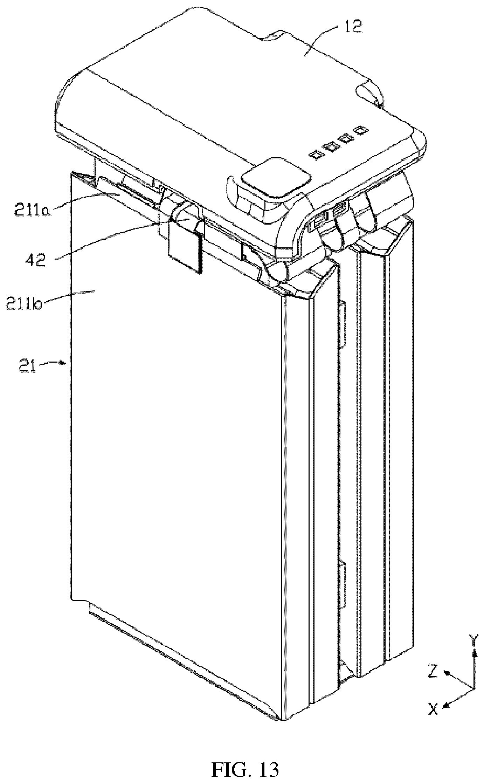

Referring to FIGs. 1 and 13, this application further provides a method for manufacturing the foregoing battery pack 100, specifically including the following steps.

Step S91: Connect the first electrical connection portion 40 and the cell module and place the first electrical connection portion 40 and the cell module in the housing assembly 10 to complete the assembly;

Step S92: Extend the second part 42 out of the opening 10a of the housing assembly 10, connect the second part 42 and the external testing apparatus, and test the battery pack 100;

Step S93: After the testing is completed, bend the second part 42 back into the housing assembly 10.

Step S94: Dispose the third insulating member 14 at the opening 10a to close the housing assembly 10.

In the foregoing method for manufacturing the battery pack 100, the battery pack 100 after assembled is connected to an external testing apparatus for testing, allowing detection of damages to the battery pack 100 caused by the assembly process during the assembly. This facilitates prompt repairs, thereby enhancing the assembly yield and quality of the battery pack 100.

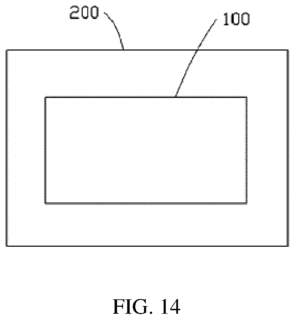

Referring to FIG. 14, this application further provides an electric device 200 using the foregoing battery pack 100, which can be used after connected to the connector 31 on the circuit board 30 via a line. In an embodiment, the electric device 200 in this application may be but is not limited to a portable fax machine, a portable copier, a portable printer, a video recorder, a liquid crystal television, a portable cleaner, a transceiver, a standby power source, a motor, an electric vehicle, an electric motorcycle, an electric motor bicycle, an electric tool, or a large household battery.

In the battery pack 100 and the electric device 200 in this application, the first electrical connection portion 40 is connected to the external testing apparatus. The battery pack assembled is connected to the external testing apparatus for testing through the second part 42. This testing method enables the testing of the battery pack 100, including detecting damages to the battery pack 100 caused by the assembly process during the assembly. This facilitates prompt repairs, thereby enhancing the assembly yield and quality of the battery pack 100. Compared with the method of setting up test ports on the circuit board for testing, this method reduces the number of components disposed on the circuit board 30, reducing the cost and decreasing the area of the surface of the circuit board 30 occupied by the components. It also reduces the risk of damage to the circuit board 30 due to the stress generated by direct contact between the external testing apparatus and the circuit board 30.

Those of ordinary skill in the art should appreciate that the foregoing some embodiments are for description of this application only but not for limiting this application. Appropriate modifications and variations made to some embodiments without departing from the essential spirit and scope of this application all fall within the scope of this application.

## Claims

1. A battery pack, comprising a housing assembly, a cell module, and a first electrical connection portion; the cell module and the first electrical connection portion are accommodated in the housing assembly; wherein
the cell module comprises a plurality of battery cells stacked in a first direction;
the housing assembly comprises a first wall and a second wall disposed opposite to each other in the first direction, the housing assembly is provided with an opening;
the first electrical connection portion comprises a first part and a second part, wherein the first part is electrically connected to the plurality of battery cells, the first part has a first edge, the second part is connected to the first edge and disposed within the housing assembly, and the second part is configured to be connected to an external testing apparatus; and
the second part has a length greater than a distance between the first edge and the first wall in the first direction.

2. The battery pack according to claim 1, wherein each battery cell comprises a cell housing, an electrode assembly disposed within the cell housing, and an electrode terminal connected to the electrode assembly and led out of the cell housing;
the second part comprises a first section and a second section, the first section is bent relative to the first direction and the second section is disposed between the first wall and the cell housing.

3. The battery pack according to claim 2, wherein the cell housing comprises an accommodating portion for accommodating the electrode assembly; wherein
in the first direction, a projection of the second section is spaced apart from a projection of the accommodating portion.

4. The battery pack according to claim 2, further comprising a circuit board; wherein the first part comprises:
a first portion comprising a conductive sheet, wherein the conductive sheet is connected to the electrode terminal, and the first portion and the cell housing are disposed opposite to each other in a second direction; and
a second portion connected to the circuit board and the first portion.

5. The battery pack according to claim 4, wherein the second portion comprises:
a first connecting portion connecting the circuit board and the first portion, and the first connecting portion is configured to transmit a current signal of the battery pack; and
a second connecting portion connecting the circuit board and the first portion, and the second connecting portion is configured to transmit a current, wherein the second connecting portion has a thickness greater than a thickness of the first connecting portion.

6. The battery pack according to claim 4, wherein the first wall is provided with a first convex portion; and in the second direction, a projection of the first convex portion overlaps with a projection of the second part.

7. The battery pack according to claim 4, wherein the battery pack further comprises a second insulating member connected to the second section, the second insulating member is disposed between the first wall and the second section;
the first wall is provided with a first convex portion; and in the second direction, a projection of the first convex portion overlaps with a projection of the second insulating member.

8. The battery pack according to claim 4, wherein the first wall is provided with a second convex portion; and in a third direction, a projection of the second convex portion overlaps with a projection of the second part, the third direction is perpendicular to both the first direction and the second direction.

9. The battery pack according to claim 2, wherein when viewed along a direction opposite to the first direction, the first section is at least partially located within the opening.

10. The battery pack according to claim 1, wherein the housing assembly comprises:
a first housing for accommodating the battery cell, wherein the first housing has a first opening; and
a second housing having a second opening; wherein
the second housing is connected to the first housing; and the first opening and the second opening form the opening.

11. The battery pack according to claim 1, wherein the housing assembly comprises:
a third insulating member disposed within the opening, wherein the third insulating member covers the opening.

12. A method for manufacturing the battery pack according to any one of claims 1 to 11, the method comprising the following steps:
connecting the first electrical connection portion and the cell module and placing the first electrical connection portion and the cell module in the housing assembly;
extending the second part out of the opening of the housing assembly, connecting the second part and the external testing apparatus, and testing the battery pack; and
after the testing is completed, bending the second part back into the housing assembly.

13. An electric device, comprising the battery pack according to any one of claims 1 to 11 or a battery pack manufactured by the manufacturing method according to claim 12.
